# EUROPÄISCHE PATENTANMELDUNG

(11) **EP 2 426 000 A2**
(43) Veröffentlichungstag der Anmeldung: **07.03.2012**
(21) Anmeldenummer: 11006805.3
(22) Anmeldetag: 20.08.2011
(51) Int. Cl.: B60K 15/067, F16B 2/08

(54) **Spannband**

(30) Priorität: 06.09.2010 DE 102010037327
(71) Anmelder: Kirchhoff Automotive Deutschland GmbH, 57439 Attendom (DE)
(72) Erfinder: Epe, Andreas, 57439 Attendorn (DE)
(74) Vertreter: Köchling, Conrad-Joachim

(57) **Zusammenfassung**

Die Erfindung betrifft ein Spannband zur Befestigung eines Tanks an Karosserieteilen oder Chassisteilen eines Kraftfahrzeuges, bestehend aus einem Metallbandstreifen mit Mitteln zur Befestigung, wobei der Metallbandstreifen über seinen Längsverlauf unterschiedliche Wandstärke aufweist.

## Beschreibung

Die Erfindung betrifft ein Spannband zur Befestigung eines Tanks an Karosserieteilen oder Chassisteilen eines Kraftfahrzeuges, bestehend aus einem Metallbandstreifen mit Mitteln zur Befestigung.

Solche Spannbänder sind im Stand der Technik vielfach bekannt. Beispielsweise sind solche Spannbänder bügelartig geformt mit gleichlangen Bügelschenkeln, wobei an den Enden der Bügelschenkel Abwinklungen vorgesehen sind, die Lochungen zur Befestigung der Spannbänder an Karosserieteilen oder Chassisteilen aufweisen. Auch ist es bekannt, an diesen Abwinklungen Flanschplatten oder dergleichen zu befestigen, die ebenfalls Lochungen aufweisen, um Befestigungsmittel hier durchzusetzen, mittels derer Spannbänder an Fahrzeugteilen befestigt werden. Die Länge der Spannbänder und die Höhe der entsprechenden Bügelformen ist unterschiedlich. Auch der Winkel der Bügelschenkel zum Mittelteil ist unterschiedlich, teils rechtwinklig, teils stumpfwinklig. Auch asymmetrisch ausgebildete Spannbänder sind üblich, bei denen beispielsweise nur ein Ende abgewinkelt ist und das andere zur Befestigung dienende Ende nahezu gradlinig zum Mittelteil ausläuft. Solche Spannbänder werden an den damit ausgestatteten Fahrzeugen häufig nicht nur einfach, sondern mehrfach eingesetzt. Insgesamt bedeutet jedes Spannband eine zusätzliche Gewichtsbelastung des damit ausgestatteten Fahrzeuges. Da die Spannbänder eine hohe Sicherheitsfunktion leisten müssen, ist eine Materialreduzierung zum Zwecke der Gewichtsersparnis nur im geringfügigen Maße möglich.

Ausgehend von diesem Stand der Technik liegt der Erfindung die Aufgabe zugrunde, Spannbänder gattungsgemäßer Art zu schaffen, die gegenüber den bisherigen Konstruktionen eine durchaus erhebliche Gewichtsersparnis erreichen, wobei auch die Design- und Herstellbarkeitsmöglichkeiten erweitert werden sollen.

Eine erste Lösung dieser Aufgabe wird darin gesehen, dass der Metallbandstreifen über seinen Längsverlauf unterschiedliche Wandstärke aufweist.

Durch eine derartige Ausgestaltung wird erreicht, dass der Metallbandstreifen entsprechend seiner späteren tatsächlichen Belastung über seinen Längsverlauf unterschiedliche Wandstärke aufweist. Hierdurch wird gegenüber der bisherigen bekannten Ausbildung mit konstanter Wandstärke eine Gewichtsersparnis erreicht.

Vorzugsweise ist dabei vorgesehen, dass der Metallbandstreifen in einem Mittelbereich eine geringere Wandstärke als in seinen Endbereichen aufweist.

Der Mittelbereich solcher Spannbänder muss im Regelfall keine so hohen Kräfte aufnehmen und keinen so hohen Belastungen widerstehen, wie die Endbereiche, so dass der Mittelbereich eine geringere Wandstärke aufweisen kann, wohingegen die Endbereiche eine größere Wandstärke aufweisen.

Bevorzugt ist dabei vorgesehen, dass der Metallbandstreifen in einem Mittelbereich weniger als die halbe Wandstärke gegenüber seinen Endbereichen aufweist.

Beispielsweise kann die Wandstärke im Mittelbereich 1,2 mm betragen, während sie in den Endbereichen 2,5 mm betragen kann. Diese Abmessungen sind aber nicht abschließend. Beispielsweise kann auch die Wandstärke im Mittelbereich 1,3 mm und die Wandstärke in den Endbereichen 2,0 mm aufweisen.

Des Weiteren kann vorgesehen sein, dass der Übergang von dem Bereich größerer Wandstärke zu geringerer Wandstärke stufig ist.

Eine solche Ausbildung wird beispielsweise dann erreicht, wenn die Spannbänderabschnitte von im Wege eines Tailored-Strip-Verfahrens hergestellt sind.

Alternativ kann auch vorgesehen sein, dass der Übergang von dem Bereich größerer Wandstärke zu geringerer Wandstärke kontinuierlich ausgebildet ist.

Solche kontinuierliche Querschnittsabnahme wird beispielsweise dann erreicht, wenn das Ausgangsmaterial als so genannte Tailored-Rolled-Blanks hergestellt werden.

Eine bevorzugte Lösung der Aufgabe, die kumulativ oder auch alternativ zu der bisher beschriebenen Lösung eingesetzt werden kann, wird darin gesehen, dass der Metallbandstreifen über seinen Längsverlauf unterschiedliche Festigkeit aufweist.

Bei dieser Ausgestaltung weist der Metallbandstreifen über seinen Längsverlauf unterschiedliche Festigkeit auf, so dass allein durch die unterschiedliche, auf die Belastungszustände abgestimmten Festigkeiten eine entsprechende Ausbildung erreicht wird.

Durch diese Maßnahmen kann ebenfalls das Ausgangsmaterial für das Spannband mit geringerer Dicke ausgebildet werden, da es entsprechend seinem Belastungszustand unterschiedliche Festigkeiten aufweist, um trotz geringerer Wandstärke noch bessere Eigenschaften als bisher übliche Spannbänder zu erreichen.

Bevorzugt ist dabei vorgesehen, dass der Metallbandstreifen in einem Mittelbereich eine geringe oder mittlere Festigkeit und vorzugsweise eine hohe Zähigkeit aufweist und in seinen Endbereichen eine hohe Festigkeit aufweist.

Unter Umständen kann diese Ausbildung auch mit einer unterschiedlichen Wandstärke in den unterschiedlichen Bereichen kombiniert werden, um eine optimale Wirkung und eine möglichst kostengünstige Ausgestaltung zu erreichen.

Auch kann vorgesehen sein, dass der Metallbandstreifen durchgehend gleiche Wandstärke aufweist.

Insbesondere ist auch vorgesehen, dass der Metallbandstreifen aus Stahl besteht.

Alternativ kann auch vorgesehen sein, dass ein Abschnitt des Metallbandstreifens aus Stahl und ein anderer Abschnitt aus einer Aluminiumlegierung besteht.

Sofern eine durchgehend gleiche Wandstärke eingestellt wird, kann diese gegenüber herkömmlicher Wandstärke von solchen Spannbändern reduziert werden. Beispielsweise kann die Wandstärke um 30 bis 40 % reduziert werden, wenn als Ausgangsmaterial für das Spannband ein Stahlband eingesetzt wird, welches über seinen Längsverlauf unterschiedliche Festigkeiten entsprechend der vorherigen Formulierung aufweist. Alternativ oder zusätzlich kann bei unterschiedlichen Wandstärken über den Verlauf des Spannbandes eine erhebliche Gewichtsersparnis erreicht werden. Aufgrund einer solchen Ausgestaltung kann selbst dann, wenn das Ausgangsmaterial geringfügig teurer als herkömmlich ist, ein preisgünstigeres Endprodukt in Form des Spannbandes zur Verfügung gestellt werden, welches zusätzliche Gewichtsersparnis realisiert.

Eine bevorzugte Ausbildung wird auch darin gesehen, dass der Mittelbereich sich etwa geradlinig erstreckt und die Endbereiche davon abgebogene Teilstücke sind, so dass insgesamt eine Bügelform mit gleichlangen oder ungleichlangen Schenkeln gebildet ist.

Des Weiteren ist bevorzugt vorgesehen, dass mindestens das Endstück eines Endbereiches gelocht ist und/oder eine damit verbundene Flanschplatte aufweist.

Auch ist bevorzugt vorgesehen, dass mindestens ein Endstück eines Endbereiches nach außen abgewinkelt ausläuft, vorzugsweise etwa parallel zum Mittelbereich.

Insbesondere ist bevorzugt vorgesehen, dass der Bereich geringer Wandstärke und/oder der Bereich geringer Festigkeit des Mittelbereichs bis kurz vor die Abwinklung der die Endbereiche bildenden Teilstücke vorgesehen ist und der Bereich großer Wandstärke und/oder hoher Festigkeit an diesen Mittelbereich anschließt und bis zum freien Ende der Endbereiche vorgesehen ist.

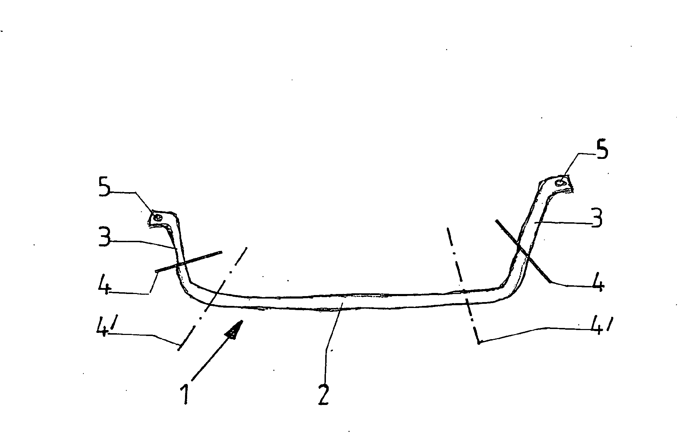

Ein schematisiertes Ausführungsbeispiel der Erfindung ist in der Zeichnung dargestellt und im Folgenden näher beschrieben. Die Zeichnungsfigur zeigt ein Ausführungsbeispiel eines erfindungsgemäßen Spannbandes in Ansicht.

Ein solches Spannband 1 dient zur Befestigung eines Tanks an Teilen eines Kraftfahrzeuges. Es besteht aus einem Metallbandstreifen sowie Mitteln zur Befestigung desselben an Fahrzeugteilen.

Erfindungsgemäß weist der Metallbandstreifen, aus dem das Spannband gebildet ist, über seinen Längsverlauf unterschiedliche Wandstärke auf. Vorzugsweise weist der Metallbandstreifen in einem Mittelbereich 2 eine geringere Wandstärke als in seinen Endbereichen 3 auf. Der Mittelbereich 2 ist im Ausführungsbeispiel durch die Strichlinien 4 von den Endbereichen 3 unterscheidbar. Die Strichlinien 4 können aber auch, wie in der Zeichnung strichpunktiert angegeben, bei 4' vorgesehen sein. In einer bevorzugten Ausführungsform weist der Metallbandstreifen in seinem Mittelbereich 2 weniger als die halbe Wandstärke gegenüber seinen Endbereichen 3 auf. Je nach Herstellungsart ist der Übergang von dem Mittelbereich 2 zu den Endbereichen 3 stufig oder kontinuierlich. Eine alternative Ausführungsform, die auch mit unterschiedlicher Wandstärke des Materials kombiniert werden kann, besteht darin, dass der Metallbandstreifen über seinen Längsverlauf unterschiedliche Festigkeit aufweist. Hierzu weist der Metallbandstreifen beispielsweise im Mittelbereich 2 eine geringe Festigkeit oder eine mittlere Festigkeit und eine hohe Zähigkeit auf, wohingegen er in seinen Endbereichen 3 eine hohe Festigkeit bis zu Hochfestigkeit aufweisen kann. Bei einer solchen Ausgestaltung kann der Metallbandstreifen durchgängig die gleiche Materialstärke aufweisen.

Gemäß einer weiteren Ausbildung der Erfindung ist es auch möglich, einen Abschnitt des Metallbandstreifens aus Stahl und andere Abschnitte aus einer Aluminiumlegierung zu fertigen. Beispielsweise kann der Mittelbereich 2 aus Aluminiumlegierung und die Endbereiche 3 aus Stahl bestehen oder auch in anderer Paarung kann eine entsprechende Materialkombination entsprechend den Beanspruchungen des Spannbandes 1 vorgesehen sein.

Wie im Ausführungsbeispiel gezeigt, erstreckt sich der Mittelbereich 2 etwa gradlinig, während die Endbereiche 3 davon abgebogene Teilstücke sind, so dass sich insgesamt eine Bügelform mit gleichlangen oder auch ungleichlangen Schenkeln ergibt. Jeweils die Endstücke der Endbereiche 3 sind gelocht (bei 5). Es können aber auch in diesen Bereichen Flanschplatten aufgebracht sein, die Lochungen aufweisen. Die Lochungen dienen zur Durchführung von Befestigungs-mitteln, um das Spannband an entsprechenden Fahrzeugteilen zu befestigen. Hierzu ist auch vorgesehen, dass die Endstücke der Endbereiche 3 jeweils nach außen abgewinkelt verlaufen, vorzugsweise etwa parallel zum Mittelbereich 2.

Je nach Einsatzfall und nach Belastungszustand ist es durch entsprechende Materialauswahl, Materialdickenauswahl und Materialfestigkeitsauswahl möglich, das Spannband entsprechend den besonderen Bedingungen anzupassen und somit kostengünstig Spannbänder für bestimmte Anwendungszwecke zur Verfügung zu stellen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Spannband zur Befestigung eines Tanks an Karosserieteilen oder Chassisteilen eines Kraftfahrzeuges, bestehend aus einem Metallbandstreifen mit Mitteln zur Befestigung, **dadurch gekennzeichnet, dass** der Metallbandstreifen über seinen Längsverlauf unterschiedliche Wandstärke aufweist.

2. Spannband nach Anspruch 1, **dadurch gekennzeichnet, dass** der Metallbandstreifen in einem Mittelbereich (2) eine geringere Wandstärke als in seinen Endbereichen (3) aufweist.

3. Spannband nach Anspruch 1 oder 2, **dadurch gekennzeichnet, dass** der Metallbandstreifen in einem Mittelbereich (2) weniger als die halbe Wandstärke gegenüber seinen Endbereichen (3) aufweist.

4. Spannband nach einem der Ansprüche 1 bis 3, **dadurch gekennzeichnet, dass** der Übergang von dem Bereich größerer Wandstärke zu geringerer Wandstärke stufig ist.

5. Spannband nach einem der Ansprüche 1 bis 3, **dadurch gekennzeichnet, dass** der Übergang von dem Bereich größerer Wandstärke zu geringerer Wandstärke kontinuierlich ausgebildet ist.

6. Spannband nach dem Oberbegriff des Anspruches 1, insbesondere nach einem der Ansprüche 1 bis 5, d**adurch gekennzeichnet, dass** der Metallbandstreifen über seinen Längsverlauf unterschiedliche Festigkeit aufweist.

7. Spannband nach Anspruch 6, **dadurch gekennzeichnet, dass** der Metallbandstreifen in einem Mittelbereich (2) eine geringe oder mittlere Festigkeit und vorzugsweise eine hohe Zähigkeit aufweist und in seinen Endbereichen (3) eine hohe Festigkeit aufweist.

8. Spannband nach Anspruch 6 oder 7, **dadurch gekennzeichnet, dass** der Metallbandstreifen durchgehend gleiche Wandstärke aufweist.

9. Spannband nach einem der Ansprüche 1 bis 8, **dadurch gekennzeichnet, dass** der Metallbandstreifen aus Stahl besteht.

10. Spannband nach einem der Ansprüche 1 bis 8, **dadurch gekennzeichnet, dass** ein Abschnitt des Metallbandstreifens aus Stahl und ein anderer Abschnitt aus einer Aluminiumlegierung besteht.

11. Spannband nach einem der Ansprüche 1 bis 10, **dadurch gekennzeichnet, dass** der Mittelbereich (2) sich etwa geradlinig erstreckt und die Endbereiche (3) davon abgebogene Teilstücke sind, so dass insgesamt eine Bügelform mit gleichlangen oder ungleichlangen Schenkeln gebildet ist.

12. Spannband nach Anspruch 11, **dadurch gekennzeichnet, dass** mindestens das Endstück eines Endbereiches (3) gelocht ist und/oder eine damit verbundene Flanschplatte aufweist.

13. Spannband nach Anspruch 11 oder 12, **dadurch gekennzeichnet, dass** mindestens ein Endstück eines Endbereiches (3) nach außen abgewinkelt ausläuft, vorzugsweise etwa parallel zum Mittelbereich (2).

14. Spannband nach einem der Ansprüche 1 bis 13, **dadurch gekennzeichnet, dass** der Bereich geringer Wandstärke und/oder der Bereich geringer Festigkeit des Mittelbereichs (2) bis kurz vor die Abwinklung der die Endbereiche (3) bildenden Teilstücke vorgesehen ist und der Bereich großer Wandstärke und/oder hoher Festigkeit an diesen Mittelbereich (2) anschließt und bis zum freien Ende der Endbereiche (3) vorgesehen ist.
